# EUROPEAN PATENT APPLICATION

(11) **EP 4 520 643 A1**
(43) Date of publication of application: **12.03.2025**
(21) Application number: 24194917.1
(22) Date of filing: 16.08.2024
(51) Int. Cl.: B62K 7/04, B62K 15/00

(54) **CARGO BICYCLE**

(30) Priority: 28.08.2023 CN 202322326450 U
(71) Applicant: Shenzhen Xunlu Innovation Technology Co., Ltd., Shenzhen Guangdong (CN)
(72) Inventor: GUO, Zhuo, Shenzhen, Guangdong (CN); ZHANG, Bin, Shenzhen, Guangdong (CN)
(74) Representative: Cabinet Chaillot

(57) **Abstract**

Embodiments of the present application relate to the technical field of bicycles, and disclose a cargo bicycle. The cargo bicycle includes: a front frame component, including at least one front wheel; a middle frame component, including at least two auxiliary wheels and a steering structure; a rear frame component, including at least one rear wheel; a telescopic structure connected to the front frame component and the middle frame component, and capable of adjusting a horizontal distance between the front frame component and the middle frame component; and a folding device connected to the middle frame component and the rear frame component, and capable of adjusting a folding state between the rear frame component and the middle frame component. By providing the cargo bicycle with the telescopic structure and the folding device, the cargo bicycle provided by the present application can not only load and transport a variety of cargoes of different volumes, but can also reduce the overall size of the bicycle in some usage scenarios, improving user experience.

## Description

### TECHNICAL FIELD

The present application relates to the technical field of bicycles, and in particular to a cargo bicycle.

### BACKGROUND ART

A cargo bicycle generally includes a front wheel, a rear wheel and a frame which are arranged along a longitudinal axis of the cargo bicycle. Generally, a cargo bicycle further includes a front cargo loading portion for loading and/or transporting goods and/or people, which generally makes the cargo bicycle relatively large. In addition, the cargo bicycle generally further includes a transmission system for driving the bicycle, pedals connected to a crankshaft for engaging with the transmission system, a seat cushion configuration for a user to sit on, and a steering configuration for steering the cargo bicycle.

A front-loading cargo bicycle has been favored by many users for its low center of gravity, easy control, large cargo capacity, the ability to see the loaded people and cargoes with greater safety, etc. However, due to the too long body and a large size of the front-loading cargo bicycle, it has the following problems: inconvenient steering and movement in a small space, large area occupied when parked, high costs of long-distance transportation, etc. The cargo capacity of conventional small-size cargo bicycles cannot meet user requirements, and the user experience is poor.

### SUMMARY

Based on this, it is necessary to provide a cargo bicycle with a large cargo capacity and a small size for easy carrying in view of the problem of the too long body and too large size of the conventional cargo bicycles.

An embodiment of the present application provides a cargo bicycle. The cargo bicycle includes: a front frame component, including at least one front wheel; a middle frame component, including at least two auxiliary wheels and a steering structure; a rear frame component, including at least one rear wheel; a telescopic structure connected to the front frame component and the middle frame component, and capable of adjusting a horizontal distance between the front frame component and the middle frame component; and a folding device connected to the middle frame component and the rear frame component, and capable of adjusting a folding state between the rear frame component and the middle frame component.

In some embodiments, a telescopic travel of the telescopic structure is greater than 25 cm.

In some embodiments, the telescopic structure includes a telescopic rod and a locking member, one end of the telescopic rod being connected to the middle frame component, the other end of the telescopic rod being connected to the front frame component, and the locking member being configured to control the telescopic travel of the telescopic rod.

In some embodiments, the middle frame component further includes a body head tube, the folding device further includes a spindle, and a center-to-center distance between the spindle and the body head tube is not less than 15 cm.

In some embodiments, the middle frame component includes two auxiliary wheels arranged on two sides of the cargo bicycle, a center-to-center distance between the two auxiliary wheels being greater than 10 cm.

In some embodiments, the auxiliary wheels are ordinary mechanical wheels or motor-driven wheels.

In some embodiments, the middle frame component further includes an auxiliary wheel bracket, and there is a linkage relationship between an extended/retracted state of the auxiliary wheel bracket and a locked/unlocked state of the folding device.

In some embodiments, the folding device is in the unlocked state only when the auxiliary wheel bracket is in the extended state.

In some embodiments, the auxiliary wheel bracket is connected to the folding device, and the auxiliary wheel bracket is capable of driving the folding device into the unlocked state when in the extended state; and the auxiliary wheel bracket is capable of driving the folding device into the locked state when in the retracted state.

In some embodiments, the auxiliary wheel bracket includes a latch, a restoring spring, a sliding sleeve, a push rod and a cam; the latch has one end connected to the restoring spring, and the other end connected to the folding device; and the auxiliary wheels are rotatable axially forward and backward about the cam.

The cargo bicycle provided by the embodiments of the present application has the following beneficial effects. The cargo bicycle is provided with the telescopic structure and the folding device, so that the distance between the front frame component and the middle frame component is adjusted by the telescopic structure, thereby enabling a variety of cargoes of different volumes to be loaded. Moreover, the folding device is used to adjust the folding state between the middle frame component and the rear frame component, so that the overall size of the cargo bicycle can be reduced in some usage scenarios, thereby expanding the usage scenarios of the cargo bicycle. The cargo bicycle provided by the embodiments of the present application that combines the telescopic structure and the folding device can expand a variety of usage scenarios while meeting the different cargo needs of users, providing an excellent user experience.

### BRIEF DESCRIPTION OF THE DRAWINGS

One or more embodiments are exemplarily described by the corresponding drawings, but these exemplary descriptions do not constitute a limitation on the embodiments. Elements with the same reference signs in the drawings are represented as similar elements. Unless otherwise stated, the figures in the drawings are not drawn to scale.
FIG. 1 is a schematic structural diagram of a cargo bicycle provided by an embodiment of the present application in an unfolded and unloaded state;
FIG. 2 is a schematic structural diagram of the cargo bicycle provided by the embodiment of the present application in an unfolded and loaded state;
FIGS. 3-4 are schematic structural diagrams of the cargo bicycle provided by the embodiment of the present application in a folded and unloaded state;
FIGS. 5-6 are schematic structural diagrams of the cargo bicycle provided by the embodiment of the present application in a folded and loaded state; and
FIG. 7 is a schematic structural diagram of an auxiliary wheel bracket provided by the embodiment of the present application, showing the specific structure of the auxiliary wheel bracket.

### List of reference signs:

110. Front frame component; 111. Front wheel;
120. Middle frame component; 121. Auxiliary wheel; 122. Body head tube; 123. Steering structure; 124. Auxiliary wheel bracket; 1241. Latch; 1242. Restoring spring; 1243. Sliding sleeve 1243; 1244. Push rod; 1245. Cam 1245;
130. Rear frame component; 131. Rear wheel;
140. Telescopic structure; 141. Telescopic rod; 142. Locking member;
150. Folding device; 151. Spindle.

### DETAILED DESCRIPTION OF EMBODIMENTS

In order to make the objective, features and advantages mentioned above of the present application more clearly understood, particular embodiments of the present application will be described in detail below with reference to the accompanying drawings. In the following description, numerous specific details are set forth in order to provide a thorough understanding of the present application. However, the present application can be implemented in numerous other ways that are different from those described herein, those skilled in the art can make similar improvements without departing from the connotation of the present application, and therefore the present application is not limited to the particular embodiments disclosed below.

In the description of the present application, it should be understood that orientation or positional relationships indicated by terms such as "center", "longitudinal", "transverse", "length", "width", "thickness", "up", "down", "front", "rear", "left", "right" "vertical", "horizontal", "top", "bottom", "inside", "outside", "clockwise", "counterclockwise", "axial", "radial", and "circumferential" are based on orientation or position relationships shown in the accompanying drawings and are merely for ease of description of the present application and simplification of the description, rather than indicating or implying that the apparatuses or elements referred to must have a specific orientation or be constructed and operated in a specific orientation, and therefore cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the present application, the meaning of "a plurality of" is at least two, such as two, three and so on, unless otherwise specifically defined.

In the present application, unless expressly stated or defined otherwise, the terms such as "mounting", "connection", "connected" and "fixing" should be interpreted broadly, for example, they may be a fixed connection, a detachable connection, or an integrated connection; may be a mechanical connection or an electrical connection; or may be a direct connection or an indirect connection by means of an intermediate medium, and may be communication between the interiors of two elements or the interaction relationship of the two elements, unless otherwise expressly defined. For those of ordinary skill in the art, specific meanings of the above terms in the present application can be understood according to specific circumstances.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of" the second feature may be the case that the first feature is directly above or obliquely above the second feature, or only means that the level of the first feature is higher than the second feature. The expression the first feature being "underneath", "below" and "beneath" the second feature may be the case that the first feature is directly below or obliquely below the second feature, or only means that the level of the first feature is less than the second feature.

It should be noted that when an element is referred to as being "fixed to" or "arranged on" another element, it may be directly on the other element or an intervening element may be present. When an element is referred to as being "connected" to another element, it may be directly connected to the other element or an intervening element may be present. The terms "vertical", "horizontal", "upper", "lower", "left", "right" and similar expressions used herein are for the purpose of illustration only and do not represent any unique embodiment.

A cargo bicycle refers to a bicycle that can load/transport cargoes/people. The cargo bicycle may be an ordinary pedal bicycle or an electric bicycle driven by a motor. It should be understood that the driving method of the cargo bicycle is not limited in the present application, that is, the cargo bicycle mentioned in the present application may be an ordinary pedal bicycle or an electric bicycle driven by a motor, and of course, it may also be a bicycle driven by other methods.

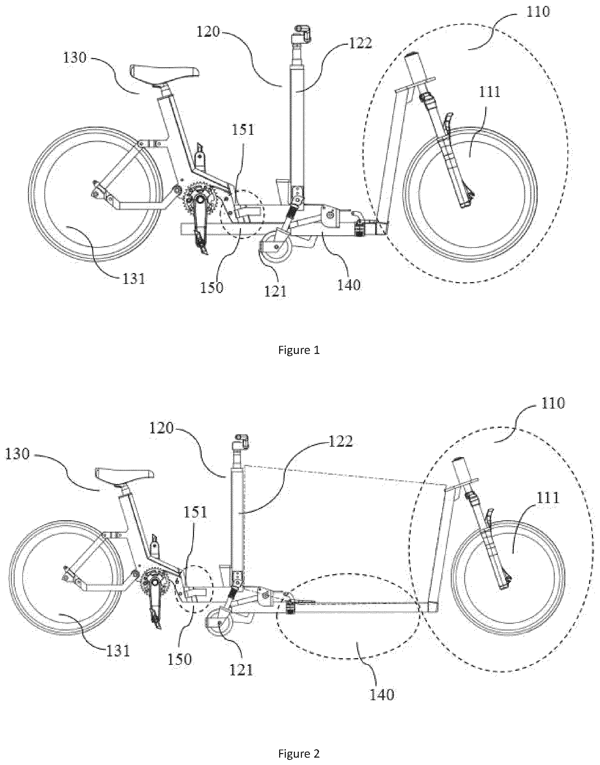

FIG. 1 is a schematic structural diagram of a cargo bicycle provided by an embodiment of the present application. As shown in FIG. 1, the cargo bicycle includes: a front frame component 110, a middle frame component 120, a rear frame component 130, a telescopic structure 140, and a folding device 150.

The front frame component 110 is provided with a front wheel 111. The number of front wheels 111 is at least one, and the specific number is not limited in the embodiments of the present application. The middle frame component 120 is provided with auxiliary wheels 121 and a steering structure 123. The number of auxiliary wheels 121 is at least two, and the specific number is not limited in the embodiments of the present application. The steering structure 123 is configured to change a traveling direction of the cargo bicycle. The rear frame component 130 is provided with a rear wheel 131. The number of rear wheels 131 is at least one, and the specific number is not limited in the embodiments of the present application. The telescopic structure 140 is configured for connection with the front frame component 110 and the middle frame component 120. The telescopic structure 140, the front frame component 110 and the middle frame component 120 enclose a loading area (not shown, the same below) configured to load cargoes and/or people. The telescopic structure 140 can adjust a horizontal distance between the front frame component 110 and the middle frame component 120, thereby changing the size of the loading area. The folding device 150 is configured for connection with the middle frame component 120 and the rear frame component 130, and can adjust a folding state between the rear frame component 130 and the middle frame component 120.

As shown in FIG. 1, the telescopic travel of the telescopic structure 140 is the shortest. In this case, the horizontal distance between the front frame component 110 and the middle frame component 120 is the shortest, and the cargo bicycle now may be used as an ordinary bicycle.

As shown in FIG. 2, the telescopic structure 140 is in an elongated state. In this case, the telescopic travel of the telescopic structure 140 can be adjusted to adjust the horizontal distance between the front frame component 110 and the middle frame component 120 according to the volume of a cargo, thereby adjusting the size of the loading area according to the volume of the cargo.

As shown in FIGS. 1-2, the folding device 150 is in a locked state, and is configured for connection with the middle frame component 120 and the rear frame component 130. In this case, the folding device 150 provides a fixed connection function, and the cargo bicycle is in the form of an ordinary bicycle.

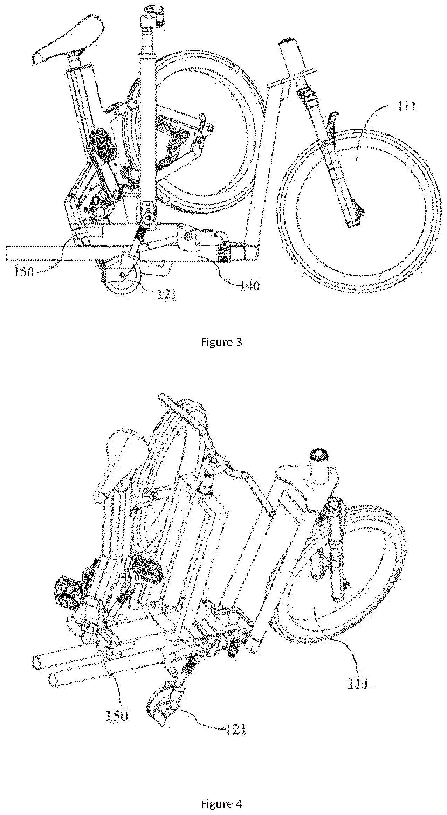

As shown in FIGS. 3-6, the folding device 150 is in an unlocked state, and the rear frame component 130 may be folded to a side of the middle frame component 120. In this case, the front wheel 111 provided on the front frame component 110 and the two auxiliary wheels 121 provided on the middle frame component 120 form a stable three-point support. In this case, the overall body length and size of the cargo bicycle are significantly reduced, which is convenient for a user to carry and transport, and also convenient for the user to enter and exit an elevator, a doorway, a narrow curve, etc. The cargo bicycle can also occupy a smaller area when parked. In addition, since a stable three-point support is formed between the front wheel 111 provided on the front frame component 110 and the two auxiliary wheels 121 provided on the middle frame component 120, the cargo bicycle is very stable and firm when parked or moving.

It should be noted that in the embodiment of the present application, the telescopic structure 140 and the folding device 150 may both adopt some common conventional telescopic structure designs and folding structure designs. Moreover, there is no one-to-one correspondence between the telescopic state and telescopic travel of the telescopic structure 140 and the locked/unlocked state of the folding device 150. The user can make adjustments according to the volume, type, usage scenario, usage state, etc. of the loaded cargo, and the embodiments of the present application do not impose any limitation on this. For example, when the telescopic structure 140 is in the elongated state, the folding device 150 may be in any one of the locked and unlocked states; and when the telescopic structure 140 is in a shortened state, the folding device 150 may be in any one of the locked and unlocked states.

In some embodiments, still referring to FIGS. 1-2, the telescopic travel of the telescopic structure 140 is greater than 25 cm. Preferably, the telescopic travel of the telescopic structure 140 may reach a maximum of about 50 cm, which can ensure that the cargo bicycle can load most daily necessities. Of course, this is only a preferred setting, and the specific telescopic travel of the telescopic structure is not limited here.

In some embodiments, still referring to FIGS. 1-2, the middle frame component 120 further includes a body head tube 122. The body head tube 122 is directly connected to the steering structure 123. The folding device 150 further includes a spindle 151. A center-to-center distance between the spindle 151 and the body head tube 122 is not less than 15 cm, which can ensure that the rear frame component 130 when in the folded state has a more appropriate width, can be more convenient to enter and exit an elevator, a doorway, a narrow curve, etc., and can also be more easily parked in a relatively narrow place. It should be noted that the center-to-center distance between the spindle 151 and the body head tube 122 specifically refers to a distance between the center of an end face of the spindle 151 and a central axis of the body head tube 122.

In some embodiments, the number of auxiliary wheels 121 provided on the middle frame component 120 is at least two, but the specific number is not limited in the embodiments of the present application. Further, when there are two auxiliary wheels 121, the two auxiliary wheels 121 are arranged on left and right sides of a body of the cargo bicycle. For greater stability, a center-to-center distance between the two auxiliary wheels 121 is set to be greater than 20 cm, but the specific value is not limited in the embodiments of the present application.

Further, the auxiliary wheels 121 may be ordinary mechanical wheels or motor-driven wheels, which is not limited in the embodiments of the present application.

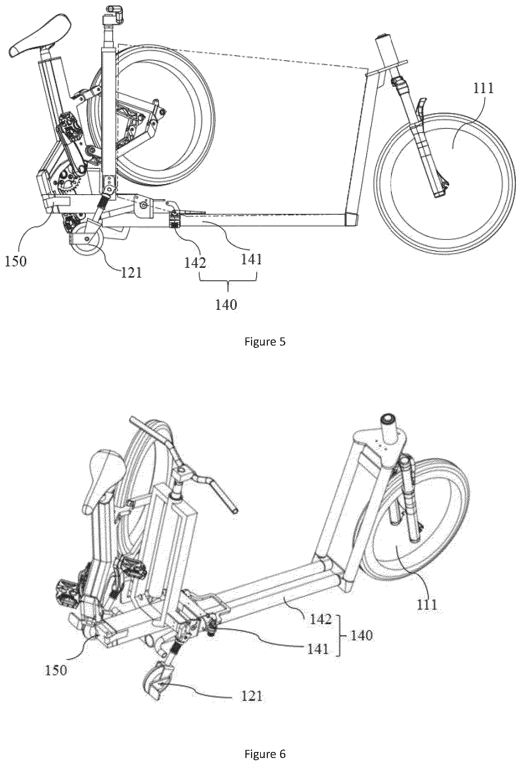

In some embodiments, as shown in FIGS. 5-6, the telescopic structure 140 includes a telescopic rod 141 and a locking member 142. The telescopic rod 141 has one end connected to the middle frame component 120, and the other end connected to the front frame component 110. The locking member 142 is configured to control the telescopic travel of the telescopic rod 141. Further, the locking member 142 may be a hoop, which is used to tighten or loosen the telescopic rod 141 to achieve the purpose of telescoping. Of course, the locking member 142 may alternatively be other locking structures, such as a bolt, to control the telescopic travel of the telescopic rod 141 by tightening or loosening the bolt. The specific structure of the locking member 142 is not limited in the embodiments of the present application. Further, the locking member 142 may be connected to the middle frame component 120, the telescopic rod 141 is connected to the front frame component 110, the telescopic rod 141 may be extended into the locking member 142, and the locking member 142 may lock the telescopic rod 141 during its forward and backward movements, thereby changing the telescopic travel.

In some embodiments, as shown in FIG. 6, the middle frame component 120 further includes an auxiliary wheel bracket 124 (not shown, the same below). The auxiliary wheel bracket 124 is mainly configured to control the state of the auxiliary wheels 121. When the auxiliary wheel bracket 124 is in an extended state, the auxiliary wheel 121 may contact the ground, so as to assist the movement of the cargo bicycle. When the auxiliary wheel bracket 124 is in a retracted state, there is a certain distance between the auxiliary wheels 121 and the ground. In this case, the cargo bicycle realizes the movement of the bicycle through the transmission of the front wheel 111 and the rear wheel 131.

Further, there is a linkage relationship between the position of the auxiliary wheel bracket 124 and the locked/unlocked state of the folding device 150. Specifically, the folding device 150 is in the unlocked state only when the auxiliary wheel bracket 124 is in the extended state. Therefore, it can be ensured that only when the auxiliary wheel bracket 124 is in the extended state and the auxiliary wheels 121 can contact the ground, the user can unlock the folding device 150, and the middle frame component 120 and the rear frame component 130 can be in the folded state. This configuration ensures that the user will not unlock the folding device 150 by mistake, and the center of gravity of the cargo bicycle will not shift or become unstable in the folded state, so that the cargo bicycle will be safer in various application scenarios.

It should be noted that the folding device 150 may adopt a general folding structure, such as a spindle folding structure, an axis folding structure and a cam folding structure, and the specific structure of the folding device is not limited in the embodiments of the present application. The linkage relationship between the extended/retracted state of the auxiliary wheel bracket 124 and the locked/unlocked state of the folding device 150 can be implemented by a variety of linkage structures such as mechanical locking, and the linkage relationship may exist in various forms. For example, when the auxiliary wheel bracket 124 is in the extended state, the folding device 150 may alternatively be in the locked state. The specific linkage structure and linkage relationship are not limited in the embodiments of the present application.

In some embodiments, the auxiliary wheel bracket 124 is connected to the folding device 150, and the auxiliary wheel bracket 124 may drive the folding device 150 into the unlocked state when in the extended state; and the auxiliary wheel bracket 124 may drive the folding device 150 into the locked state when in the retracted state.

It should be noted that the folding device 150 may further include some self-locking structures. After the auxiliary wheel bracket 124 is in the extended state and the folding device 150 is driven into the unlocked state, a self-locking structure of the folding device 150 may still be in the locked state. In this case, the user needs to unlock the self-locking structure to fold the cargo bicycle. This double locking method can be safer. Where the user causes the auxiliary wheel bracket 124 to be extended by mistake, there will be no accidental injury due to the sudden unlocking of the folding device 150.

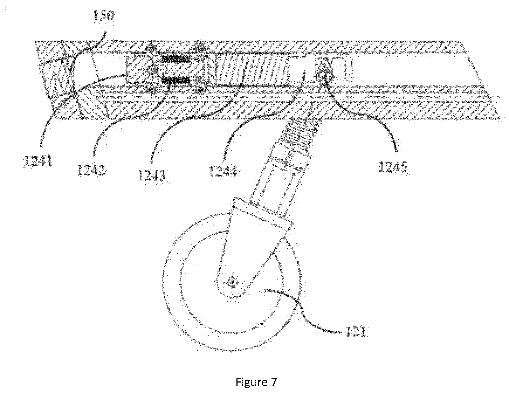

Further, as shown in FIG. 7, the auxiliary wheel bracket 124 includes a latch 1241, a restoring spring 1242, a sliding sleeve 1243, a push rod 1234 and a cam 1245. The latch 1241 has one end connected to the restoring spring 1242, and the other end connected to the folding device 150. The auxiliary wheels 121 can rotate axially forward and backward about the cam 1245. During forward and backward rotation of the auxiliary wheels 121, the cam 1245 will exert a force to the push rod 1234, such that the push rod 1234 slides in the sliding sleeve 1223, so as to drive the latch 1241 and the folding device 150 to move.

Specifically, when the auxiliary wheels 121 rotate forward, the push rod 1245 slides forward, and the restoring spring 1242 drives the latch 1241 to move forward, and engages with a corresponding engagement groove at a predetermined position. In this case, the auxiliary wheel bracket 124 is in the retracted state, and the auxiliary wheels 121 and the folding device 150 are both in a secured state. Furthermore, when the auxiliary wheels 121 rotate backward, the push rod 1245 slides forward, the restoring spring 1242 drives the latch 1241 to disengage from the corresponding engagement groove, and the folding device 150 is connected to the latch 1241. In this case, the auxiliary wheel bracket 124 is in the extended state, the auxiliary wheels 121 can contact the ground, and the folding device 150 is connected to the latch 1241, and is now in the unlocked state.

The technical features of the above embodiments may be combined arbitrarily. For the purpose of simplicity in description, all the possible combinations of the technical features in the above embodiments are not described. However, as long as there is no contradiction among the combinations of these technical features, they shall all fall within the scope of the specification.

The embodiments described above merely illustrate several implementations of the present application and are described relatively specifically and in detail, but should not be construed as limiting the patent scope of the present application. It should be noted that several variations and improvements may also be made by those of ordinary skill in the art without departing from the concept of the present application, and should fall within the scope of protection of the present application. Therefore, the scope of protection of the present patent application shall be in accordance with the appended claims.

## Claims

1. A cargo bicycle, comprising:
a front frame component, comprising at least one front wheel;
a middle frame component, comprising at least two auxiliary wheels and a steering structure;
a rear frame component, comprising at least one rear wheel;
a telescopic structure connected to the front frame component and the middle frame component, and
capable of adjusting a horizontal distance between the front frame component and the middle frame component; and
a folding device connected to the middle frame component and the rear frame component, and capable of adjusting a folding state between the rear frame component and the middle frame component.

2. The cargo bicycle of claim 1, wherein a telescopic travel of the telescopic structure is greater than 25 cm.

3. The cargo bicycle of claim 1, wherein the telescopic structure comprises a telescopic rod and a locking member, one end of the telescopic rod being connected to the middle frame component, the other end of the telescopic rod being connected to the front frame component, and the locking member being configured to control the telescopic travel of the telescopic rod.

4. The cargo bicycle of claim 1, wherein the middle frame component further comprises a body head tube, the folding device further comprises a spindle, and a center-to-center distance between the spindle and the body head tube is not less than 15 cm.

5. The cargo bicycle of claim 1, wherein the middle frame component comprises two auxiliary wheels arranged on two sides of the cargo bicycle, a center-to-center distance between the two auxiliary wheels being greater than 10 cm.

6. The cargo bicycle of claim 1, wherein the auxiliary wheels are ordinary mechanical wheels or motor-driven wheels.

7. The cargo bicycle of any one of claims 1 to 6, wherein the middle frame component further comprises an auxiliary wheel bracket, and there is a linkage relationship between an extended/retracted state of the auxiliary wheel bracket and a locked/unlocked state of the folding device.

8. The cargo bicycle of claim 7, wherein the folding device is in the unlocked state only when the auxiliary wheel bracket is in the extended state.

9. The cargo bicycle of claim 8, wherein the auxiliary wheel bracket is connected to the folding device, and the auxiliary wheel bracket is capable of driving the folding device into the unlocked state when in the extended state; and the auxiliary wheel bracket is capable of driving the folding device into the locked state when in the retracted state.

10. The cargo bicycle of claim 8, wherein the auxiliary wheel bracket comprises a latch, a restoring spring, a sliding sleeve, a push rod and a cam; the latch has one end connected to the restoring spring, and the other end connected to the folding device; and the auxiliary wheels are rotatable axially forward and backward about the cam.
